# EUROPEAN PATENT SPECIFICATION

(11) **EP 4 191 198 B1**
(45) Date of publication and mention of the grant of the patent: **26.11.2025**
(21) Application number: 21848892.2
(22) Date of filing: 29.07.2021
(51) Int. Cl.: G01C 15/00, G06F 3/04845, G06T 11/60

(54) **SURVEYING ASSISTANCE PROGRAM, SURVEYING ASSISTANCE DEVICE, SURVEYING ASSISTANCE METHOD, AND SURVEYING ASSISTANCE SYSTEM**
VERMESSUNGSHILFSPROGRAMM, VERMESSUNGSHILFSVORRICHTUNG, VERMESSUNGSHILFSVERFAHREN UND VERMESSUNGSHILFSSYSTEM
PROGRAMME D'AIDE AU GÉOMÉTRAGE, DISPOSITIF D'AIDE AU GÉOMÉTRAGE, PROCÉDÉ D'AIDE AU GÉOMÉTRAGE, ET SYSTÈME D'AIDE AU GÉOMÉTRAGE

(30) Priority: 31.07.2020 JP 2020131153
(43) Date of publication of application: 07.06.2023
(73) Proprietor: TOPCON CORPORATION, Tokyo 174-8580 (JP)
(72) Inventor: ICHIRIYAMA, Umihiro, Tokyo 174-8580 (JP); MIYAJIMA, Motohiro, Tokyo 174-8580 (JP); NAKAMURA, Keisuke, Tokyo 174-8580 (JP); SHIMIZU, Ryosuke, Tokyo 174-8580 (JP)
(74) Representative: dompatent
(86) International application number: PCT/JP2021/028133
(87) International publication number: WO 2022/025196

(56) References cited:
- JP-A- 2002 098 527
- JP-A- 2006 003 206
- JP-A- 2009 097 297
- JP-A- 2017 020 834
- JP-A- 2017 037 016

## Description

### Technical Field

The present invention relates to a surveying assistance program, a surveying assistance device, a surveying assistance method, and a surveying assistance system.

### Background Art

In construction of a linear structure such as a route, a construction plan drawing is prepared, and a construction plan is drawn up while considering a volume of soil of cutting and banking. Route survey means surveying used for examination, planning, design development, etc. for construction of a linear structure. Route survey includes cross-sectional observation in which a height difference (vertical distance) between a constituent point on a cross-section orthogonal to a route and a center point on the cross-section and a center point distance (horizontal distance) are surveyed and a shape of the cross-section is observed. In cross-sectional observation, as a deliverable, a cross-sectional view is prepared for which observation points are connected traversably from the left to the right in a direction in which a section continues.

In route survey, in recent years, a method using an electro-optical device such as a total station or a GNSS survey device, with a target or a GNSS receiver used as a surveyed device respectively, a worker holding the surveyed device moves between observation points to acquires necessary observation point data is used.

Further, in the method described above, a surveying assistance system let a mobile information processing device read design information including constituent point data to display a plan view, a cross-sectional view, and numerical information on a display unit is proposed. (See, for example, Patent Literature 1, Non-Patent Literature 1, etc.) Further background art for the present invention is described in Patent Literature 2.

### Citation List

### Patent Literature

Patent Literature 1: Specification of Japanese Patent No. 6224659
Patent Literature 2: JP 2017 037016 A

### Non-Patent Literature

Non-Patent Literature 1: Operation Manual for Data Collector FC-500 Kantoku-san. V, TOPKON CORPORATION, 2. Observation, p. 42-51

### Summary of Invention

### Technical Problem

However, in a surveying assistance system described in Non-Patent Literature 1, a cross-sectional view is created by drawing a straight line connecting observation point data in order of observation.

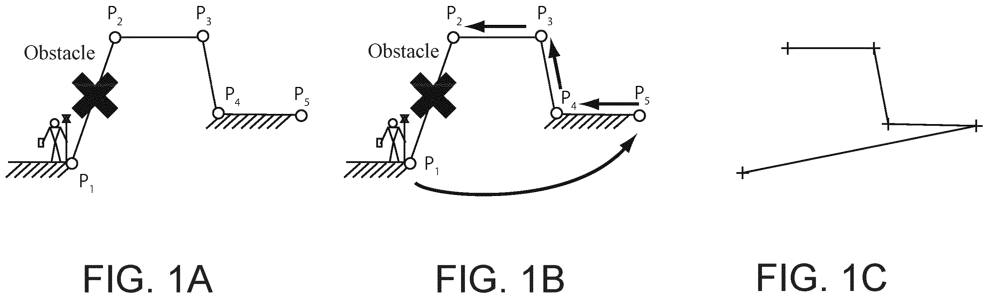

Therefore, a worker is required to observe in order from the left so that an assumed cross-sectional view is created. However, practically, it is not always possible to observe in order from the left. For example, in observation on a section as illustrated in FIG. 1A, in a case where there is a hollowed cliff or an obstacle between points P₂ and P₃ and it is difficult to observe the point P₂ and then the point P₃, the order of measurement is sometimes unavoidable such as from P₁ to P₅, P₄, P₃, P₂, as in FIG. 1B. Alternatively, there is sometimes a case where measurement in order from the left to the right is remarkably inefficient.

In such a case, in a conventional surveying assistance system, a cross-sectional view as illustrated in FIG. 1C is unavoidably created. In a case where an assumed cross-sectional view is not obtained by one-time observation, an observation work has to be performed once again (do-over) to perform measurement from the left and the right again, or very complicated processing has to be performed on a surveying assistance device to prepare a cross-sectional view again.

The present invention was made in view of the above circumstances, and an object thereof is to provide a technique with which a cross-sectional view assumed by a worker can be easily prepared in cross-sectional observation.

### Solution to Problem

The present invention is defined in the independent claims.
In order to achieve the object described above, a surveying assistance program according to an aspect of the present invention is to make a computer read design information including center point data and constituent point data of a route, the design information in which a cross-section including a center point, the cross-section being orthogonal to the route is set, acquire position information indicating a current position of a surveyed device with a predetermined period, create a plan view and a cross-sectional view of the route from the design information, and display the plan view and the cross-sectional view on a screen unit of the computer, record the acquired position information and survey information calculated from the position information in a storage unit of the computer as observation point data on the cross-section, display an observation point data list in which the observation point data is arranged as data placed in order and an observational cross-sectional view displaying positions of observation points on the cross-sectional view on the screen unit of the computer, make a display order of the observation point data in the observation point data list rearrangeable following a command from an operation unit of the computer, and display a connection line connecting the observation points on the observational cross-sectional view following the rearranged display order.

Further, in the aspect described above, it is also preferable that the screen unit and the operation unit of the computer are configured as a touch panel display, and the surveying assistance program is to make the computer make the display order of the observation point data rearrangeable by a worker touching a screen to move the displayed observation point data, and in conjunction with rearrangement of the display order, update a display of the connection line so as to connect the observation points in the rearranged display order on the observational cross-sectional view.

Further, in the aspect described above, it is also preferable that the surveying assistance program is to make the computer, when the observation point data is selected for rearrangement of the display order, display an observation point corresponding to the selected observation point data on the observational cross-sectional view so that the observation point is identifiable.

Further, a surveying assistance device according to another aspect of the present invention includes a terminal screen unit, a terminal operation unit, a terminal control unit, and a terminal storage unit, wherein the terminal control unit includes a design information reading unit that reads design information including center point data and constituent point data of a route, in which a cross-section including a center point, the cross-section being orthogonal to the route is set, a position information acquiring unit that acquires position information indicating a current position of a surveyed device with a predetermined period, a view display unit that creates a plan view and a cross-sectional view from the design information, and displays the plan view and the cross-sectional view on the terminal screen unit, a recording executing unit that records the acquired position information and survey information calculated from the position information in the terminal storage unit as observation point data on the cross-section, a cross-sectional result display unit that displays an observation point data list in which the observation point data is arranged as data placed in order and an observational cross-sectional view displaying positions of observation points on the cross-sectional view on the terminal screen unit, a display order rearranging unit that makes a display order of the observation point data in the observation point data list rearrangeable following a command from the terminal operation unit, and a connection line display unit that displays the observation points on the observational cross-sectional view to be connected by a line following the display order.

Further, a surveying assistance system according to still another aspect of the present invention includes a position acquiring device that acquires the current position of the surveyed device, and the surveying assistance device according to the aspect described above, wherein the surveying assistance device is capable of communicating with the position acquiring device so as to acquire the position information of the surveyed device.

Further, in a surveying assistance method according to yet another aspect of the present invention, a computer reads design information including center point data and constituent point data of a route, in which a cross-section including a center point, the cross-section being orthogonal to the route is set, acquires position information indicating a current position of a surveyed device with a predetermined period, creates a plan view and a cross-sectional view of the route from the design information, and displays the plan view and the cross-sectional view on a screen unit of the computer, records the acquired position information and survey information calculated from the position information in a storage unit of the computer as observation point data on the cross-section, displays an observation point data list in which the observation point data is arranged as data placed in order and an observational cross-section displaying positions of observation points on the cross-sectional view on the screen unit of the computer, makes a display order of the observation point data in the observation point data list rearrangeable following a command from an operation unit of the computer, and displays a connection line connecting the observation points on the observational cross-sectional view following the display order.

### Advantageous Effects of Invention

With the surveying assistance program, the surveying assistance device, the surveying assistance method, and the surveying assistance system according to the aspects described above, it is possible to easily prepare a cross-sectional view assumed by a worker.

### Brief Description of Drawings

FIGS. 1A to 1C are views illustrating problems of a cross-sectional view created in a conventional surveying assistance system.
FIG. 2 is a view illustrating design information used in a surveying assistance system according to an embodiment.
FIG. 3 is a schematic external appearance view of the same surveying assistance system.
FIG. 4 is a configuration block diagram of the same surveying assistance system.
FIGS. 5A and 5B are views each illustrating an example of an observation screen and a cross-sectional result screen displayed on a terminal screen unit of a surveying assistance device of the same embodiment.
FIG. 6 is a flowchart illustrating an example of a surveying assistance method using the same surveying assistance system.
FIG. 7 is a flowchart illustrating an example of processing of cross-sectional result display in the same surveying assistance method.
FIGS. 8A to 8C are views each illustrating an example of a sorting method of observation point data in the surveying assistance system of the same embodiment.
FIG. 9 is a view illustrating an example of the cross-sectional result display displayed on the terminal screen unit of the surveying assistance device of the same embodiment.
FIG. 10 is a view illustrating an example of a cross-section of a surveying site to which the surveying assistance system of the same embodiment is preferably applicable.

### Description of Embodiments

Hereinafter, preferred embodiments of the present invention will be described with reference to the drawings, however, the present invention is not limited to these. In the embodiments, members having the same functions and configurations will be provided with the same reference signs, and overlapping description will be omitted as appropriate.

### (Embodiment)

### (Design Information)

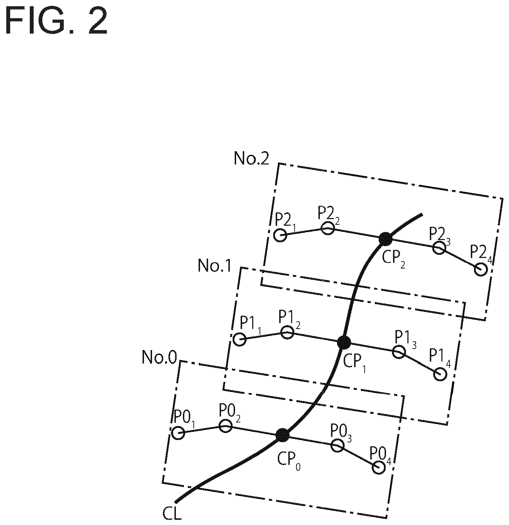

Prior to description of a configuration of a surveying assistance system (hereinafter, simply referred to as the "system") 100 according to the embodiment of the present invention, design information used in the present system will be described with reference to FIG. 2. Note that the example of FIG. 2 is a view for the convenience of description and is not limited to a particular shape.

The design information is, for example, information prepared with absolute coordinates, the information including a route blueprint required in work of a route, etc. The design information includes centerline data indicating a centerline CL of the route. The design information also includes center point data indicating center points CP₀, CP₁, CP₂, ... set at predetermined intervals (for example, intervals of 20 m) on the centerline CL. The center points are points at which center stakes are installed in a site.

In the design information, cross-sections (hereinafter, simply referred to also as the "sections") No. 0, No. 1, No. 2, ... respectively including the center points CP₀, CP₁, CP₂, ..., the cross-sections being orthogonal to the centerline are set. On the sections, constituent points are set, for example, on the section No. 0, constituent points P0₁ to P0₄ are set. The constituent points are points at which stakes serving as marks in the site are installed like points that regulate a width of a road. For example, the constituent points P0₁, P1₁, P2₁, ... are set at positions whose distances from the center points on the sections are equal along a route direction.

### (Entire Configuration of System)

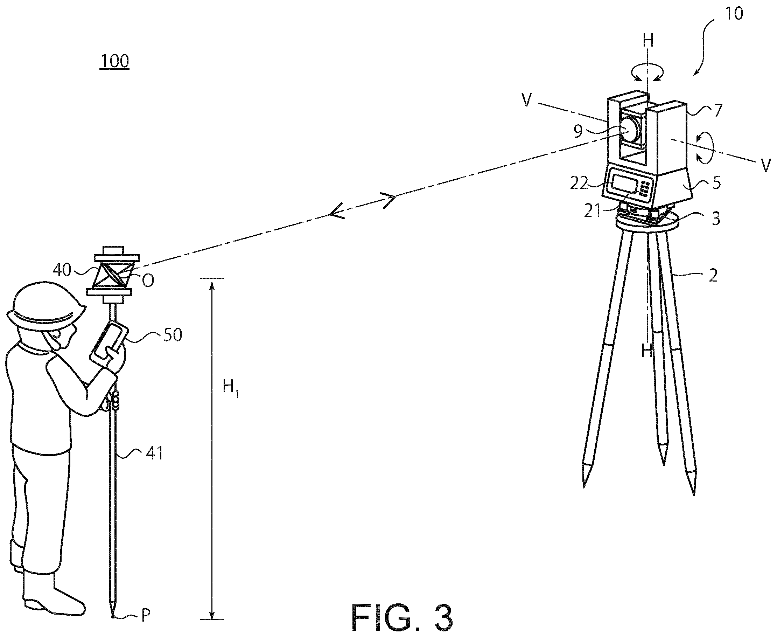

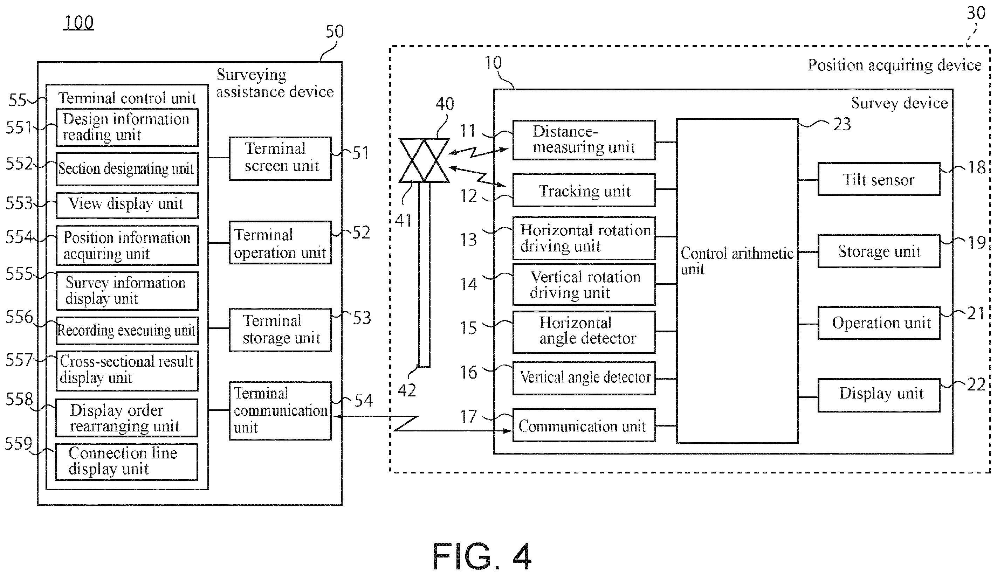

As illustrated in FIGS. 3 and 4, the system 100 includes a position acquiring device 30 and a surveying assistance device 50.

### (Configuration of Position Acquiring Device 30)

The position acquiring device 30 includes a survey device 10 and a surveyed device 40. The survey device 10 is a total station (electronic distance-measuring and angle-measuring instrument) as a working example. The survey device 10 is installed at a known point via a tripod 2. Alternatively, coordinate of an install point maybe made known by, for example, a backward intersection method, or the like after the survey device 10 is installed. The known coordinate data of the survey device 10 is input into the surveying assistance device 50 in advance and stored in a terminal storage unit 53.

The survey device 10 has, in appearance, a base portion 5 provided on a leveling unit 3, a bracket portion 7 to be rotated horizontally about an axis H-H on the base portion 5, and a telescope 9 to be rotated vertically about an axis V-V in the bracket portion 7. A control arithmetic unit 23 to be described later is accommodated in the bracket portion 7.

The survey device 10 includes an automatic collimation function and an automatic tracking function, and an optical distance-measuring system and an optical tracking system (not illustrated) are accommodated in the telescope 9. Configurations of the optical distance-measuring system and the optical tracking system are conventionally publicly known. In the survey device 10, by cooperation of horizontal rotation of the bracket portion 7 and vertical rotation of the telescope 9, a distance-measuring light and a tracking light are irradiated over the entire circumference.

As illustrated in FIG. 4, the survey device 10 includes a distance-measuring unit 11, a tracking unit 12, a horizontal rotation driving unit 13, a vertical rotation driving unit 14, a horizontal angle detector 15, a vertical angle detector 16, a communication unit 17, a tilt sensor 18, a storage unit 19, an operation unit 21, a display unit 22, and the control arithmetic unit 23.

The distance-measuring unit 11 emits a distance-measuring light by using the optical distance-measuring system, receives a reflected light from a target 41 provided in the surveyed device 40, and automatically collimates and measures a distance to the target 41.

The tracking unit 12 emits a tracking light by using the optical tracking system, captures a position of the target 41 from a reflected light from the target 41, and in a case where the target 41 is moved, automatically tracks the target 41.

The horizontal rotation driving unit 13 is a motor provided in the base portion 5. The horizontal rotation driving unit 13 rotates the bracket portion 7 about the axis H-H with respect to the base portion 5. The vertical rotation driving unit 14 is a motor provided in the bracket portion 7. The vertical rotation driving unit 14 rotates the telescope 9 about the axis V-V.

The horizontal angle detector 15 and the vertical angle detector 16 are rotary encoders. The horizontal angle detector 15 detects an angle of the bracket portion 7 about the axis H-H, and the vertical angle detector 16 detects an angle of the telescope 9 about the axis V-V. As a result, the horizontal angle detector 15 and the vertical angle detector 16 constitute an angle-measuring unit that measures an angle to the target 41.

The communication unit 17 is a communication control device that connects the survey device 10 and the surveying assistance device 50 by wire or wirelessly. As a communications standard to realize the communication unit 17, Wi-Fi (registered trademark) as one of wireless LAN standards or 4G (fourth-generation mobile communications system) may be adopted. Alternatively, a short-range wireless communications standard such as Bluetooth (registered trademark) and infrared communication may be adopted.

The tilt sensor 18 is a tilt sensor of a bubble tube type, a capacitance type, etc., and is fixed on an upper surface of a rotation shaft (not illustrated) of the base portion 5. A value of the tilt sensor 18 when a rotation shaft of the horizontal rotation driving unit 13 is once rotated forward and backward is read, and based on a gap amount of forward and backward rotations, horizontalness of the leveling unit 3 is adjusted.

The storage unit 19 is a storage medium that memorizes, stores, and transmits information in a form with which the control arithmetic unit 23 is capable of processing, and for example, anHDD (Hard Disc Drive) , a flashmemory, etc. is adopted. In the storage unit 19, the measured survey data and a program for various processing in the control arithmetic unit are stored.

The operation unit 21 is a plurality of buttons provided on an outer surface of the bracket portion 7. Various information relating to actions of the survey device 10 can be input via the operation unit 21.

The display unit 22 is a liquid crystal display provided on the outer surface of the bracket portion 7, and displays various information relating to surveying.

The control arithmetic unit 23 is a microcomputer for which a CPU (Central Processing Unit), a ROM (Read Only Memory), a RAM (Random Access Memory), etc. are mounted on an integrated circuit. The control arithmetic unit 23 is connected to the units of the survey device 10.

The control arithmetic unit 23 reads the program for executing various functions of the survey device 10 from the storage unit 19 or the RAM and controls the units of the survey device 10 to execute various functions such as automatic tracking, distance measurement, and angle measurement. The control arithmetic unit 23 also performs arithmetic processing on data obtained by distance measurement and angle measurement, and acquires position information (position coordinates) of the target 41.

Further, the control arithmetic unit 23 communicates with the surveying assistance device 50 via the communication unit 17, executes measurement following an order of the surveying assistance device 50, and sends survey data of the surveyed device 40 to the surveying assistance device 50.

The surveyed device 40 includes the target 41 and a pole-shaped support member 42 that supports the target 41.

The target 41 is a so-called 360-degree prism configured by radially combining a plurality of triangular-pyramid-shaped prisms, however, the present invention is not limited to this. The target 41 retro-reflects incident light in a direction opposite to an incident direction.

In the support member 42, a length H₁ from a leading end to center O of the target 41 is known. The support member 42 includes a level (not illustrated), and can be installed vertically. By subtracting the length H of the support member 42 from three-dimensional coordinates of the center O determined from distance measurement and angle measurement data which is obtained by measuring the distance and the angle to the target 41 installed vertically at an observation point P via the support member 42 by the survey device 10 installed at the known point, it is possible to determine three-dimensional coordinates of the observation point P as the position information of the surveyed device 40.

As another working example of the position acquiring device 30, it is possible to use a GNSS survey device. In this case, by using a GNSS receiving device capable of communicating with the surveying assistance device 50 as the surveyed device 40, a current position of the surveyed device 40 is surveyed.

### (Configuration of Surveying Assistance Device)

The surveying assistance device 50 is a portable information processing device capable of communicating with the position acquiring device 30. The surveying assistance device 50 is realized by, for example, a mobile computer terminal such as a mobile phone, a smartphone, a tablet computer, a PDA, or a data collector.

The surveying assistance device 50 includes a terminal screen unit 51, a terminal operation unit 52, the terminal storage unit 53, a terminal communication unit 54, and a terminal control unit 55.

The terminal screen unit 51 is configured by, for example, a touch-panel type liquid crystal display integrated with the terminal operation unit 52. The terminal screen unit 51 displays images according to a processing content such as an observation screen 60, a section designation screen (not illustrated), or a cross-sectional result display screen (hereinafter, referred to as the "cross-sectional result screen") 80.

For the terminal storage unit 53, various programs and various data are stored in a storage medium in a readable and writable manner. The terminal storage unit 53 is, for example, an HDD. The terminal storage unit 53 may be, for example, an optical disc drive such as a CD (Compact Disc) drive. In the terminal storage unit 53, a communication program, an image display program for displaying a work content, etc. and a communication content, etc. on the terminal screen unit 51, various programs for executing cross-sectional observation, etc. are stored.

Further, in the terminal storage unit 53, initial setting information such as coordinates of the survey device 10 and a height H of the target 41, and the design information are also stored. The terminal storage unit 53 also stores measurement data of the target received from the survey device 10 and survey information calculated in a survey information display unit 555 in a form of a list in order of measurement in association with designated sections and names of the observation points indicating the constituent points.

The terminal communication unit 54 is a communication control device capable of communicating with the survey device 10 via the communication unit 17 of the survey device 10, and has the same communications standard as the communication unit 17.

The terminal control unit 55 is a control unit including at least a CPU and memories (ROM, RAM), etc. The terminal control unit 55 controls the surveying assistance device 50 and the survey device 10 based on an input signal from the terminal communication unit 54, the terminal operation unit 52, etc. The terminal control unit 55 calls and executes a program stored in the RAM or the terminal storage unit 53.

The terminal control unit 55 includes a design information reading unit 551, a section designating unit 552, a view display unit 553, a position information acquiring unit 554, the survey information display unit 555, a recording executing unit 556, a cross-sectional observation result display unit (hereinafter, referred to as the "cross-sectional result display unit") 557, a display order rearranging unit 558, and a connection line display unit 559 as functional units.

The design information reading unit 551 reads the design information stored in the terminal storage unit 53. Alternatively, the design information reading unit 551 may receive and read design information stored in an external storage device via the terminal communication unit 54.

The section designating unit 552 designates a section of an observation object from the sections set in the design information following an input of a worker. The section of the observation object is a section including a center point which serves as a reference in the calculation of vertical and horizontal distances and will be hereinafter referred to as the "designated section".

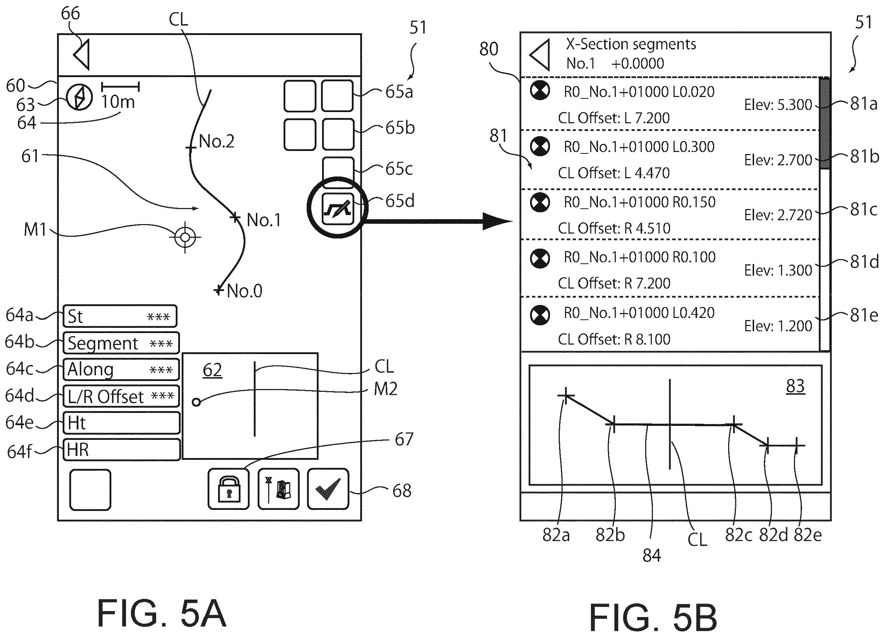

The view display unit 553 creates a plan view 61 in which the centerline CL of the route is projected on a horizontal plane from the design information, and displays it on the observation screen 60 (FIGS. 5A and 5B). The view display unit 553 also creates a cross-sectional view 62 indicating the centerline CL in the designated section from the sections set in the design information, and displays it on the observation screen 60 of the terminal screen unit 51 (FIGS. 5A and 5B). The observation screen 60 will be described later.

The position information acquiring unit 554 receives the measurement data of the target 41 measured by the survey device 10 with a predetermined period via the terminal communication unit 54 upon each measurement. The position information acquiring unit 554 acquires position coordinates of the surveyed device 40 in an absolute coordinate system as the position information of the surveyed device 40 from coordinates of the survey device 10 and the height H₁ of the target stored in the terminal storage unit 53.

The survey information display unit 555 makes display on the terminal screen unit 51 as the survey information based on the position information of the surveyed device 40 acquired by the position information acquiring unit 554 and updates the display every time the position information is acquired. The survey information includes the current position of the surveyed device 40. The current position of the surveyed device 40 is displayed on the plan view 61 as a marking M1 (FIGS. 5A and 5B), and also displayed on the cross-sectional view 62 as a marking M2 (FIGS. 5A and 5B).

Further, the survey information includes various information calculated based on the position information. For example, the survey information is a distance of the surveyed device 40 from the designated section, the horizontal distance and the vertical distance from the center point on the designated section to the current position of the surveyed device 40, etc. The survey information may also include various information relating to cross-sectional observation such as the number of a designated section (center point) and information of the constituent points in the design information.

When the worker thinks that he/she has reached the observation point, installs the surveyed device 40 at the observation point, and taps a confirmation button 69, the recording executing unit 556 stores the survey information at the current position of the surveyed device 40 in the terminal storage unit 53 as observation point data of the observation point. The observation point data is stored in association with the designated section and the constituent point in the design information corresponding to the observation point.

The cross-sectional result display unit 557 displays the cross-sectional result screen 80. The cross-sectional result screen 80 will be described later.

The display order rearranging unit 558 changes the display order of the observation points in an observation point data list displayed on the cross-sectional result screen 80 following an input of the worker. As an input method, the worker may move part of the displayed observation point data whose display order is to be changed by touching with a finger, etc. on the screen and moving it to a position of the aimed order. Specifically, for example, it is possible to perform the input by a method of rearrangement by flicking on a display unit of the observation point data displayed as a list, etc. Alternatively, the displayed observation point data list may be configured such that an order rearrangement can be input and the order is rearranged following the input.

The connection line display unit 559 draws a line connecting the observation points in the display order rearranged by the display order rearranging unit 558, and prepares an observational cross-sectional view.

Functions of the functional units may be realized by a circuit, or may be realized by executing a program. In a case where the functions are realized by a program, the program can be stored in a computer-readable storage medium such as a magnetic disk, a flexible disc, an optical disc, a compact disc, a Blu-ray (registered trademark) disc, and a DVD.

### (Observation Screen and Cross-sectional Result Screen)

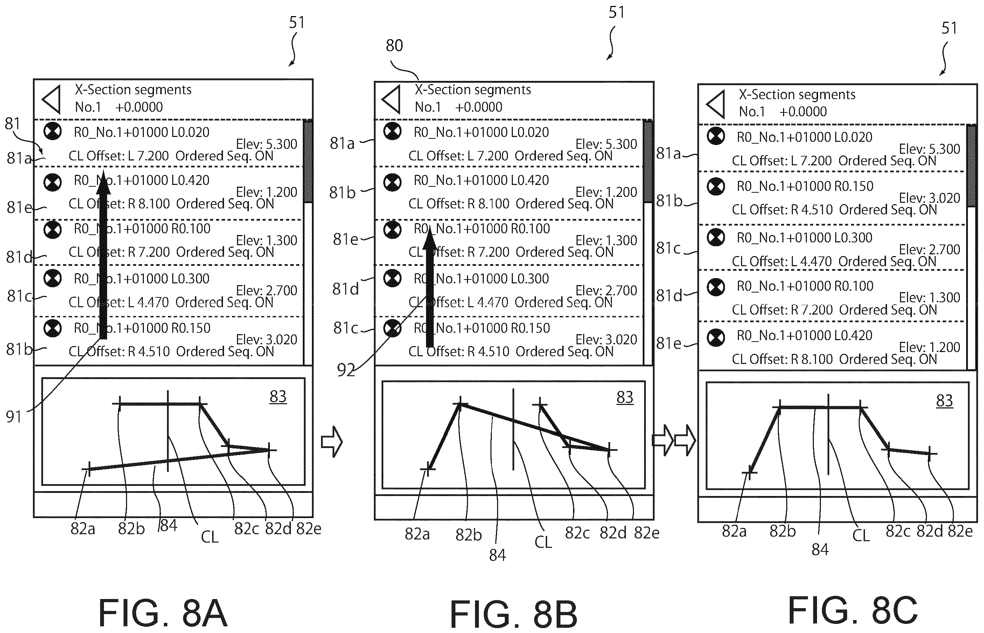

Next, with reference to FIGS. 5A and 5B, the observation screen 60 and the cross-sectional result screen 80 will be described. Note that the numbers themselves displayed on the screens of FIGS. 5A and 5B do not indicate numerical data corresponding to the cross-sectional view but are mere examples of display. The same applies to FIGS. 8A to 8C.

### (Observation Screen)

On the observation screen 60, the plan view 61 and the cross-sectional view 62 created by the view display unit 553 are displayed side by side.

Further, in the plan view 61, the marking M1 indicating the current position of the surveyed device 40 is displayed. In the cross-sectional view 62, the marking M2 indicating the current position of the surveyed device 40 is displayed.

Further, on the observation screen 60, an orientation mark 63 indicating north, south, east, and west of the plan view 61, and a map scale 64 indicating scale are displayed. Further, on the observation screen 60, functional icons 65a, 65b, 65c, ... for aiding a surveying work, including a functional icon (cross-sectional result display button) 65d for calling the cross-sectional result screen 80 are displayed. A screen shift button 66 for shifting to the section designating screen (not illustrated) for selecting the designated section as initial setting is also displayed.

Further, on the observation screen 60, an observation start/stop button 67 for ordering the survey device 10 to start and stop tracking and observation of the surveyed device 40, and a recording button 68 for recording the observation point data is displayed.

Further, on the observation screen 60, survey information marks 64a to 64f are displayed by the survey information display unit 555. The survey information marks 64a to 64f respectively indicate, for example, the section number, a designated reference point, a horizontal distance of the surveyed device 40 from the designated section in a front and rear direction of the route, a horizontal distance of the surveyed device 40 from the selected reference point in a left and right direction orthogonal to the front and rear direction of the route, a vertical distance of the surveyed device 40 from the designated reference point, and an objective height, that is, the length H₁ from the leading end of the support member 42 to the center O of the target 41.

In addition, the plan view 61 and the cross-sectional view 62 can accept arbitrarily zooming. It is possible to change a position of the cross-sectional view 62 relative to the plan view 61 which is displayed on the terminal screen unit 51 at the same time in response to a command from the terminal operation unit 52, and specifically to change the position freely in a frame by a touch panel operation. It is also possible to switch display/non-display of the cross-sectional view 62.

### (Cross-Sectional Result Screen)

On the cross-sectional result screen 80, an observation point data list 81 in which observation point data 81a to 81e recorded at the observation points are arranged as data placed in order and an observational cross-sectional view 83 displaying observation point markings 82a to 82e which indicate positions of the observation points on the basis of the observation point data 81a to 81e on the cross-sectional view 62 created by view display unit 553 are displayed.

The observation point data include, for example, the names of the observation points (e.g. RO.000_No.1+01000 L0.000), an elevation (e.g. Elev:5.300), and a distance from the center point (horizontal distance) (e.g. CL Offset:L7.200) .

Further, in the observational cross-sectional view 83, a connection line 84 connecting the observation point markings 82a to 82e is displayed.

### (Surveying Assistance Method)

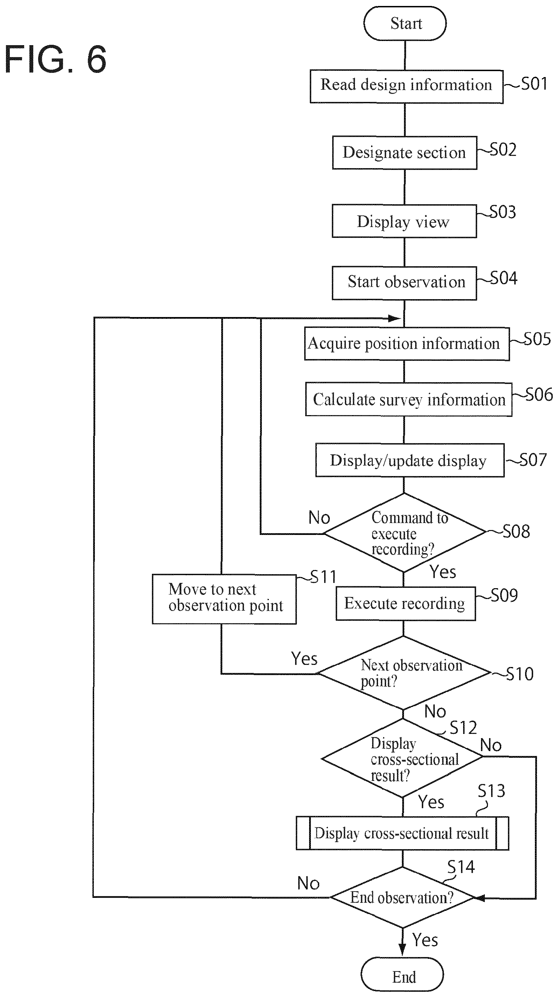

FIG. 6 is a flowchart illustrating an example of a surveying assistance method using the surveying assistance device 50 of the present embodiment.

In cross-sectional observation, the survey device 10 is installed at the known point and in a state of being capable of automatically tracking the target 41. The worker holds the surveying assistance device 50 while vertically holding the surveyed device 40, walks on the designated section of a surveying site, and when coming to a point corresponding to the constituent point (observation point), records the observation point data. This is repeated at the constituent points on the designated section.

When the surveying assistance device starts processing for cross-sectional observation, in Step S01, the design information reading unit 551 reads the design information.

Next, in Step S02, the section designating unit 552 selects a section of the observation object (designated section) following an input of the worker as initial setting.

Next, in Step S03, the view display unit 553 displays the created plan view 61 and the created cross-sectional view 62 on the observation screen 60 of the terminal screen unit 51.

Next, in Step S04, when the worker taps the observation start/stop button 67 and thereby observation is started, the survey device 10 measures the surveyed device 40 at predetermined intervals, and sends measurement data to the surveying assistance device 50 upon each measurement.

Then, in Step S05, the position information acquiring unit 554 receives the measurement data and acquires the position information of the current position of the surveyed device 40.

Next, in Step S06, the survey information display unit 555 calculates the survey information based on the position information of the current position of the surveyed device 40.

Next, in Step S07, the survey information display unit 555 displays the markings M1 and M2 indicating the current position of the surveyed device 40 on the observation screen 60 of the terminal screen unit 51, and also displays the survey information marks 64a to 64f on the observation screen 60. The survey information display unit 555 updates the displays from the second time.

Next, in a case where there is no command to execute recording (No) in Step S08, the terminal control unit 55 repeats Steps S05 to S08, calculates the survey information every time the position information is acquired, and updates the displays of the markings M1 and M2 and the survey information.

Then, when the worker taps the recording button 68 and thereby execution of recording is commanded (Yes) in Step S08, in Step S09, the recording executing unit 556 records the position information and the survey information at that time point in the terminal storage unit 53 as the observation point data. The worker walks toward a constituent point while confirming the terminal screen unit 51. When judging that he/she has reached the constituent point to be observed, the worker vertically holds the surveyed device 40, taps the recording button 68, and makes the surveying assistance device 50 record the survey information at thatpositionas the survey information of the observation point.

Next, in Step S10, the worker judges whether or not a next observation point is to be observed, and in a case where the next observation point is to be observed (Yes), in Step S11, the worker moves to the next observation point. In the meantime, the surveying assistance device 50 repeats the processing of Steps S05 to S08. Then, when reaching the next observation point, the worker taps the recording button 68. Thereby, the processing shifts to Step S09 and recording is executed.

In a case where the next observation point is not to be observed, including for the reason, for example, "an interim result is wished to be confirmed", etc. in Step S10, when the worker taps the cross-sectional result display button 65d and thereby inputs a command to display a cross-sectional result (Yes) in Step S12, in Step S13, the cross-sectional result display unit 557 displays the cross-sectional result screen 80 on the terminal screen unit 51. When display of the cross-sectional result is completed, the processing shifts to Step S14. Details of the cross-sectional result display will be described later.

On the other hand, in a case where there is no input of the command to display the cross-sectional result (No) in Step S12, the processing shifts to Step S14. Then, the terminal control unit 55 repeats Steps S05 to S14 until an operation to end observation of tapping the observation start/stop button 67 again is performed by the worker in Step S14, and in a case where a command to end observation is issued by the worker (Yes in Step S14), ends observation.

Next, the details of the cross-sectional result display will be described. For convenience of description, it is assumed that in the section of the shape illustrated in FIGS. 1A to 1C, observation is performed in the order of P₁, P₅, P₄, P₃, P₂. Data of the points P₁ to P₅ are stored in a terminal storage unit 85 as the observation point data 81a to 81e.

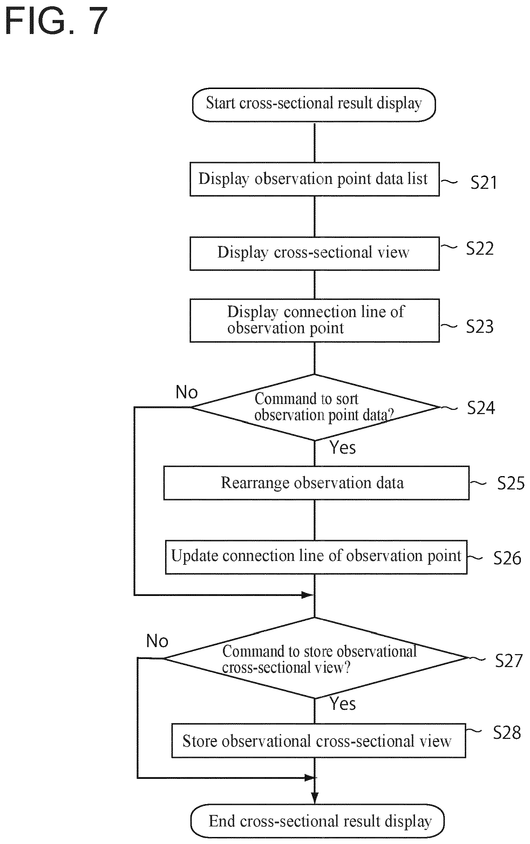

As illustrated in FIG. 7, when the cross-sectional result display is started, in Step S21, the cross-sectional result display unit 557 displays the observation point data list 81 on the terminal screen unit 51 as illustrated in FIGS. 8A to 8C.

At the same time, in Step S22, the cross-sectional result display unit 557 displays the observational cross-sectional view 83 on the terminal screen unit 51.

Next, in Step S23, the connection line display unit 559 displays the connection line 84 so that the observation point markings 82a are connected in the display order of the observation point data list 81 (FIGS. 8A to 8C).

Next, when a command to sort data by the worker is detected (Yes) in Step S24, in Step S25, the observation point data list 81 is sorted following the command. Then, in Step S26, the connection line display unit 559 updates the display of the connection line 84 so that the observation point markings 82a to 82e are connected in an order of arrangement in the observation point data list 81 and the processing shifts to Step S27.

In the present example, specifically, by flicking the observation point data 81b as illustrated by the arrow 91 in the state of FIG. 8A, a position of the observation point data 81b is moved to the next to the observation point data 81a as illustrated in FIG. 8B. Corresponding to this, the display of the connection line 84 is updated. By flicking as in the arrow 92 from the state of FIG. 8B and further continuing similarly, it is possible to create a correct observational cross-sectional view. In this way, in the present example, Steps S24 to S26 are executed substantially in conjunction at the same time.

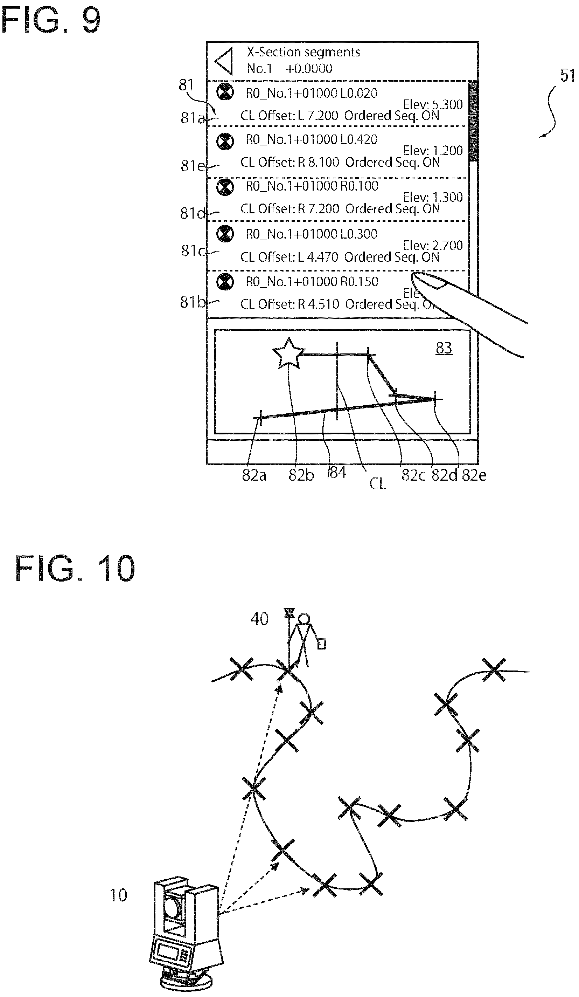

Regarding which observation point data is to be flicked by the worker at the time of flicking, it is possible to perform while confirming the name of the observation point included in the observation point data. To which observation point marking displayed on the observational cross-sectional view 83 the selected observation point data corresponds may be displayed to be visually identifiable. Specifically, as illustrated in FIG. 9, when the observation point data is tapped, the corresponding 82b may be deformed, or the like. Alternatively, colors maybe respectively different between the observation point markings 82, and the markings of the same color may be displayed for the corresponding observation point data.

On the other hand, in a case where there is no need for sorting the data and no command to sort the observation point data is detected (No) in Step S24, the processing shifts to Step S27 straightaway.

Next, detection of a command to store the observational cross-sectional view data is determined and the command is detected (Yes) in Step S27, in Step S28, the observational cross-sectional view data is stored in the terminal storage unit 53 and the processing is ended. On the other hand, in a case where there is no command (No), the processing of the cross-sectional result display is ended straightaway.

Note that the cross-sectional result display may not only be executed as a series of actions with observation but only the processing of the cross-sectional result display may be executable for confirmation at the end of observation.

Further, in a case where observation of all the observation points is not completed, the stored observational cross-sectional view data may be read and additional observation may be performed.

In the present embodiment, at the time of creating the observational cross-sectional view 83 which is a deliverable from the result of cross-sectional observation, by re-arranging the order of the observation point data 81a, ... displayed on the terminal screen unit 51, it is possible to arbitrarily rearrange the connection order of the connection line 84. With the configuration described above, it is possible to easily prepare the cross-section assumed by the worker. Thereby, the worker can execute cross-sectional observation in an efficient order without being aware of the order of measurement.

In particular, in the present embodiment, the terminal screen unit 51 and the terminal operation unit 52 are configured as a touch panel display, the observational cross-sectional view 83 and the observation point data list 81 are displayed on the cross-sectional result screen 80, and the connection line 84 whose connection is changed is displayed in conjunction with rearrangement of the order of the observation point data 81a, ... of the observation point data list 81 by flicking of the worker. With the configuration described above, the worker can sort the observation point data 81a, ... while confirming a connection state of the connection line 84 upon each flicking. Therefore, the worker can intuitively perform the observational cross-sectional view 83 while comparing with the observational cross-sectional view assumed by himself /herself, and the burden on the worker is reduced.

At a site having a cross-section of a complicated shape as in FIG. 10, it is difficult to observe in order from the left to the right. Furthermore, with a simple algorithm of connecting a connection line in order of observation or connecting a connection line from the left to the right, it is difficult to correctly connect the connection line of the observational cross-sectional view of such a complicated shape.

The present embodiment is advantageous since the connection line can be easily connected while the worker assumes an observational cross-sectional view even with an observational cross-section of a complicated shape.

### (Another Modified Example)

As another modified example, in initial setting, the worker does not set a designated section by an input but among the sections set in the design information, a section whose distance to the current position of the surveyed device 40 is the shortest may be automatically designated.

### Reference Signs List

- 10:: Survey device
- 30:: Position acquiring device
- 40:: Surveyed device
- 50:: Surveying assistance device (computer)
- 51:: Terminal screen unit (screen unit)
- 53:: Terminal storage unit (storage unit)
- 55:: Terminal control unit
- 551:: Design information reading unit
- 553:: View display unit
- 554:: Position information acquiring unit
- 556:: Recording executing unit
- 557:: Cross-sectional result display unit
- 558:: Display order rearranging unit
- 559:: Connection line display unit
- 61:: Plan view
- 62:: Cross-sectional view
- 81:: Observation point data list
- 81a:: Observation point data
- 81b:: Observation point data
- 81c:: Observation point data
- 81d:: Observation point data
- 81e:: Observation point data
- 83:: Observational cross-sectional view
- 84:: Connection line
- 85:: Terminal storage unit
- 100:: Surveying assistance system

## Claims

1. A surveying assistance program to make a computer (50):
read design information including a centerline (CL) of a route, center points set at predetermined intervals on the centerline (CL), cross-sections orthogonal to the route, each cross-section including a respective center point, and constituent points (PXₓ) set on the respective cross-sections, the constituent points being points at which stakes serving as marks in a site are to be installed;
acquire position information indicating a current position of a surveyed device (40) at predetermined intervals;
create a plan view (61) and a cross-sectional view (62) of the route from the design information, and display the plan view and the cross-sectional view on a screen unit (51) of the computer (50);
record the acquired position information and survey information calculated from the position information and the design information, in a storage unit (53) of the computer (50) as observation point data (81a, 81b, ... ) on the cross-section;
**characterized in that** the surveying assistance program is further configured to make the computer:
display an observation point data list (81) in which the observation point data (81a, 81b, ... ) is arranged as data placed in order and an observational cross-sectional view (83) displaying positions of observation points on the cross-sectional view (62) on the screen unit (51) of the computer (50);
make a display order of the observation point data (81a, 81b, ... ) in the observation point data list (81) rearrangeable following a command from an operation unit of the computer (50); and
display a connection line (84) connecting the observation points on the observational cross-sectional view (83) following the rearranged display order.

2. The surveying assistance program according to Claim 1, wherein
the screen unit (51) and the operation unit (52) of the computer (50) are configured as a touch panel display, and
the surveying assistance program is to make the computer (50):
make the display order of the observation point data (81a, 81b, ...) rearrangeable by a worker touching a screen to move the displayed observation point data; and
in conjunction with rearrangement of the display order, update a display of the connection line (84) so as to connect the observation points in a rearranged display order on the observational cross-sectional view (83).

3. The surveying assistance program according to Claim 1 or 2, the surveying assistance program to make the computer (50):
when the observation point data (81a, 81b, ... ) is selected for rearrangement of the display order, display an observation point corresponding to the selected observation point data on the observational cross-sectional view so that the observation point is identifiable.

4. A surveying assistance device (50) comprising:
a terminal screen unit (51);
a terminal operation unit (52);
a terminal control unit (55); and
a terminal storage unit (53), wherein
the terminal control unit (55) includes:
a design information reading unit (551) that reads design information including a centerline (CL) of a route, center points set at predetermined intervals on the centerline (CL), cross-sections orthogonal to the route, each cross-section including a respective center point, and constituent points (PXₓ) set on the respective cross-sections, the constituent points being points at which stakes serving as marks in a site are to be installed;
a position information acquiring unit (554) that acquires position information indicating a current position of a surveyed device (40) at predetermined intervals;
a view display unit (553) that creates a plan view (61) and a cross-sectional view (62) from the design information, and displays the plan view (61) and the cross-sectional view (62) on the terminal screen unit (51);
a recording executing unit (556) that records the acquired position information and survey information calculated from the position information and the design information, in the terminal storage unit (53) as observation point data (81a, 81b, ... ) on the cross-section;
**characterized in that** the surveying assistance device further comprises: a cross-sectional result display unit (557) that displays an observation point data list (81) in which the observation point data (81a, 81b, ... ) is arranged as data placed in order and an observational cross-sectional view (83) displaying positions of observation points on the cross-sectional view (62) on the terminal screen unit (51);
a display order rearranging unit (558) that makes a display order of the observation point data (81a, 81b, ... ) in the observation point data list (81) rearrangeable following a command from the terminal operation unit (52); and
a connection line display unit (559) that displays the observation points on the observational cross-sectional view to be connected by a line following the rearranged display order.

5. A surveying assistance system (100) comprising:
a position acquiring device (30) that acquires the current position of the surveyed device (40); and
the surveying assistance device (50) according to Claim 4, wherein
the surveying assistance device (50) is capable of communicating with the position acquiring device so as to acquire the position information of the surveyed device (40).

6. A surveying assistance method, wherein
a computer (50):
reads design information including a centerline (CL) of a route, center points set at predetermined intervals on the centerline (CL), cross-sections orthogonal to the route, each cross-section including a respective center point, and constituent points (PXₓ) set on the respective cross-sections, the constituent points being points at which stakes serving as marks in a site are to be installed;
acquires position information indicating a current position of a surveyed device at predetermined interval;
creates a plan view (61) and a cross-sectional view (62) of the route from the design information, and displays the plan view (61) and the cross-sectional view (62) on a screen unit (51) of the computer (50);
records the acquired position information and survey information calculated from the position information and the design information, in a storage unit (53) of the computer (50) as observation point data (81a, 81b, ... ) on the cross-section;
**characterized in that** the computer further:
displays an observation point data list (81) in which the observation point data (81a, 81b, ... ) is arranged as data placed in order and an observational cross-section displaying positions of observation points on the cross-sectional view on the screen unit (51) of the computer (50);
makes a display order of the observation point data (81a, 81b, ... ) in the observation point data list (81) rearrangeable following a command from an operation unit (52) of the computer (50); and
displays a connection line (84) connecting the observation points on the observational cross-sectional view (83) following the display order.

## Patentansprüche

1. Vermessungshilfsprogramm, um einen Computer (50) zu veranlassen,
Designinformationen zu lesen, welche eine Mittellinie (CL) einer Route, in vorbestimmten Intervallen auf der Mittellinie (CL) gesetzte Mittelpunkte, orthogonal zur Route verlaufende Querschnitte, wobei jeder Querschnitt einen jeweiligen Mittelpunkt aufweist, und in den jeweiligen Querschnitten gesetzte konstituierende Punkte (PXₓ) aufweisen, wobei konstituierenden Punkte Punkte sind, an welchen Absteckpfähle, die an einem Ort als Markierungen dienen, angeordnet werden sollen;
Positionsinformationen, die eine aktuelle Position einer vermessenen Vorrichtung (40) angeben, in vorbestimmten Intervallen zu erfassen;
eine Draufsicht (51) und eine Querschnittsansicht (62) der Route aus den Designinformationen zu erzeugen, und die Draufsicht sowie die Querschnittsansicht auf einer Bildschirmeinheit (51) des Computers (50) anzuzeigen;
die erfassten Positionsinformationen und aus den Positionsinformationen und den Designinformationen berechnete Vermessungsinformationen in einer Speichereinheit (53) des Computers (50) als Beobachtungspunktdaten (81a, 81b, ...) auf dem Querschnitt zu speichern,
**dadurch gekennzeichnet, dass** das Vermessungshilfsprogramm ferner dazu ausgebildet ist, den Computer zu veranlassen,
eine Beobachtungspunktdatenliste (81), in welcher die Beobachtungspunktdaten (81a, 81b,...) als in einer Reihenfolge platzierte Daten angeordnet sind, und eine Beobachtungs-Querschnittsansicht (83) anzuzeigen, welche Positionen von Beobachtungspunkten in der Querschnittsansicht (62) auf der Bildschirmeinheit (51) des Computers (50) anzeigen;
nach einem Befehl einer Bedieneinheit des Computers (50) eine Anzeigereihenfolge der Beobachtungspunktdaten (81a, 81b, ...) in der Beobachtungspunktdatenliste (81) veränderbar zu machen; und
eine Verbindungslinie (84) anzuzeigen, welche die Beobachtungspunkte in der Beobachtungs-Querschnittsansicht (83) nach der veränderten Anzeigereihenfolge verbindet.

2. Vermessungshilfsprogramm nach Anspruch 1, bei welchem
die Bildschirmeinheit (51) und die Bedieneinheit (52) des Computers (50) als Touchpanel-Display ausgebildet sind; und
das Vermessungshilfsprogramm dazu ausgebildet ist, den Computer (50) zu veranlassen,
die Anzeigereihenfolge der Beobachtungspunktdaten (81a, 81b, ...) in der Beobachtungspunktdatenliste durch einen Arbeiter veränderbar zu machen, welcher einen Bildschirm berührt, um die angezeigten Beobachtungspunktdaten zu bewegen; und
in Verbindung mit der Veränderung der Anzeigereihenfolge, eine Anzeige der Verbindungslinie (84) zu aktualisieren, um die Beobachtungspunkte in einer veränderten Anzeigereihenfolge in der Beobachtungs-Querschnittsansicht (83) zu verbinden.

3. Vermessungshilfsprogramm nach Anspruch 1 oder 2, wobei das Vermessungshilfsprogramm ferner dazu ausgebildet ist, den Computer zu veranlassen,
wenn die Beobachtungspunktdaten (81a, 81b,...) zur Veränderung der Anzeigereihenfolge gewählt werden, einen den gewählten Beobachtungspunktdaten entsprechenden Beobachtungspunkt in der Beobachtungs-Querschnittsansicht so anzuzeigen, dass der Beobachtungspunkt identifizierbar ist.

4. Vermessungshilfsvorrichtung (50) mit:
einer Terminal-Bildschirmeinheit (51);
einer Terminal-Bedieneinheit (52);
einer Terminal-Steuereinheit (55); und
einer Terminal-Speichereinheit (53), wobei
die Terminal-Steuereinheit (55) aufweist:
eine Designinformationenleseeinheit (551), welche Designinformationen liest, welche eine Mittellinie (CL) einer Route, in vorbestimmten Intervallen auf der Mittellinie (CL) gesetzte Mittelpunkte, orthogonal zur Route verlaufende Querschnitte, wobei jeder Querschnitt einen jeweiligen Mittelpunkt aufweist, und in den jeweiligen Querschnitten gesetzte konstituierende Punkte (PXₓ) aufweisen, wobei konstituierenden Punkte Punkte sind, an welchen Absteckpfähle, die an einem Ort als Markierungen dienen, angeordnet werden sollen;
eine Positionsinformationserfassungseinheit (554), die Positionsinformationen, die eine aktuelle Position einer vermessenen Vorrichtung (40) angeben, in vorbestimmten Intervallen erfasst;
eine Ansichtsanzeigeeinheit (553), die eine Draufsicht (51) und eine Querschnittsansicht (62) aus den Designinformationen erzeugt, und die Draufsicht (61) sowie die Querschnittsansicht (62) auf der Terminal-Bildschirmeinheit (51) anzeigt;
eine Speicherausführeinheit (556), welche die erfassten Positionsinformationen und aus den Positionsinformationen und den Designinformationen berechnete Vermessungsinformationen in der Terminal-Speichereinheit (53) als Beobachtungspunktdaten (81a, 81b, ...) auf dem Querschnitt speichert,
**dadurch gekennzeichnet, dass** die Vermessungshilfsvorrichtung ferner aufweist:
eine Querschnittsergebnisanzeigeeinheit (557), die eine Beobachtungspunktdatenliste (81), in welcher die Beobachtungspunktdaten (81a, 81b,...) als in einer Reihenfolge platzierte Daten angeordnet sind, und eine Beobachtungs-Querschnittsansicht (83) anzeigt, welche Positionen von Beobachtungspunkten in der Querschnittsansicht (62) auf der Terminal-Bildschirmeinheit (51) anzeigen;
eine Anzeigereihenfolgeveränderungseinheit (558), welche nach einem Befehl der Terminal-Bedieneinheit (52) eine Anzeigereihenfolge der Beobachtungspunktdaten (81a, 81b, ...) in der Beobachtungspunktdatenliste (81) veränderbar macht; und
eine Verbindungslinienanzeigeeinheit (559), welche die zu verbindenden Beobachtungspunkte in der Beobachtungs-Querschnittsansicht (83) nach der veränderten Anzeigereihenfolge anzeigt.

5. Vermessungshilfssystem (100) mit:
einer Positionserfassungsvorrichtung (30), welche die aktuelle Position der vermessenen Vorrichtung (40) erfasst; und
die Vermessungshilfsvorrichtung (50) nach Anspruch 4, wobei
die Vermessungshilfsvorrichtung (50) in der Lage ist, mit der Positionserfassungsvorrichtung zu kommunizieren, um die Positionsinformationen der vermessenen Vorrichtung (40) zu erfassen.

6. Vermessungshilfsverfahren, bei welchem ein Computer (50)
Designinformationen liest, welche eine Mittellinie (CL) einer Route, in vorbestimmten Intervallen auf der Mittellinie (CL) gesetzte Mittelpunkte, orthogonal zur Route verlaufende Querschnitte, wobei jeder Querschnitt einen jeweiligen Mittelpunkt aufweist, und in den jeweiligen Querschnitten gesetzte konstituierende Punkte (PXₓ) aufweisen, wobei konstituierenden Punkte Punkte sind, an welchen Absteckpfähle, die an einem Ort als Markierungen dienen, angeordnet werden sollen;
Positionsinformationen, die eine aktuelle Position einer vermessenen Vorrichtung (40) angeben, in vorbestimmten Intervallen erfasst;
eine Draufsicht (51) und eine Querschnittsansicht (62) der Route aus den Designinformationen erzeugt, und die Draufsicht sowie die Querschnittsansicht auf einer Bildschirmeinheit (51) des Computers (50) anzeigt;
die erfassten Positionsinformationen und aus den Positionsinformationen und den Designinformationen berechnete Vermessungsinformationen in einer Speichereinheit (53) des Computers (50) als Beobachtungspunktdaten (81a, 81b, ...) auf dem Querschnitt speichert,
**dadurch gekennzeichnet, dass** der Computer ferner
eine Beobachtungspunktdatenliste (81), in welcher die Beobachtungspunktdaten (81a, 81b,...) als in einer Reihenfolge platzierte Daten angeordnet sind, und eine Beobachtungs-Querschnittsansicht (83) anzeigt, welche Positionen von Beobachtungspunkten in der Querschnittsansicht (62) auf der Bildschirmeinheit (51) des Computers (50) anzeigen;
nach einem Befehl einer Bedieneinheit des Computers (50) eine Anzeigereihenfolge der Beobachtungspunktdaten (81a, 81b, ...) in der Beobachtungspunktdatenliste (81) veränderbar macht; und
eine Verbindungslinie (84) anzeigt, welche die Beobachtungspunkte in der Beobachtungs-Querschnittsansicht (83) nach der veränderten Anzeigereihenfolge verbindet.

## Revendications

1. Programme d'aide au géométrage pour faire un ordinateur (50) :
lire des informations de conception comportant une ligne médiane (CL) d'une route, des points centraux fixés à des intervalles prédéterminées sur la ligne médiane (CL), des sections transversales perpendiculaires à la chaussée, chaque section transversale comprenant un point central respectif, et des points constitutifs (PXₓ) fixés sur des sections transversales respectives, les points constitutifs étant des points auxquels des piquets servant comme marquages sur un site doivent être installés ;
acquérir des informations de position indiquant une position actuelle d'un dispositif sondé (40) à des intervalles prédéterminées ;
créer une vue en plan (61) et une vue en section transversale (62) de la route à partir des informations de conception et afficher la vue en plan et la vue en section transversale sur une unité d'écran (51) de l'ordinateur (50) ;
enregistrer l'information de position acquise et l'information de géométrage calculée à partir de l'information de position et l'information de conception, dans une unité de stockage (53) de l'ordinateur (50) comme des données de point d'observation (81a, 81b, ...) sur la section transversale ;
**caractérisé en ce que** le programme d'aide au géométrage est configuré en outre pour faire l'ordinateur :
afficher une liste de points d'observation (81) dans laquelle les données de point d'observation (81a, 81b, ...) sont arrangées comme des données placées dans l'ordre et une vue en section transversale d'observation (83) affichant des positions de points d'observation sur la vue en section transversale (62) sur l'unité d'écran (51) de l'ordinateur (50) ;
créer un ordre d'affichage des données de point d'observation (81a, 81b, ...) dans la liste de données de point d'observation (81) pouvant être réarrangée selon une commande provenant d'une unité de fonctionnement de l'ordinateur' (50) ; et
afficher une ligne de connexion (84) reliant les points d'observation sur la vue en section transversale d'observation (83) selon l'ordre d'affichage réarrangé.

2. Programme d'aide au géométrage selon la revendication 1, l'unité d'écran (51) et l'unité de fonctionnement (52) de l'ordinateur (50) étant configurées comme un écran tactile et
le programme d'aide au géométrage étant fait pour faire l'ordinateur (50) :
rendre l'ordre d'affichage des données de point d'observation (81a, 81b, ...) réorganisable par un ouvrier touchant l'écran pour déplacer les données de point d'observation affichées, et
en conjonction avec le réarrangement de l'ordre d'affichage, actualiser un affichage de la ligne de connexion (84) afin de relier les points d'observation dans un ordre d'affichage réarrangé sur la vue en section transversale (83).

3. Programme d'aide au géométrage selon la revendication 1 ou 2, le programme d'aide au géométrage étant fait pour faire l'ordinateur (50) :
lorsque les données de point d'observation (81a, 81b, ...) sont choisies pour un réarrangement de l'ordre d'affichage, afficher un point d'observation correspondant aux données de point d'observation choisies sur la vue en section transversale, de façon que le point d'observation soit identifiable.

4. Dispositif d'aide au géométrage (50) comprenant :
une unité d'écran de terminal (51) ;
une unité de fonctionnement de terminal (52) ;
une unité de commande de terminal (55) ; et
une unité de stockage de terminal (53),
l'unité de commande de terminal (55) comprenant :
une unité de lecture d'informations de conception (551) qui lit des informations de conception comportant une ligne médiane (CL) d'une route, des points centraux fixés à des intervalles prédéterminés sur la ligne médiane (CL), des sections transversales perpendiculaires à la route, chaque section transversale comportant un point central respectif et des points constitutifs (PXₓ) fixés sur les sections transversales respectives, les points constitutifs étant des points auxquels des piquets servant comme marquages sur un site doivent être installés ;
une unité d'acquisition d'informations de position (554) qui acquiert des informations de position indiquant une position actuelle d'un dispositif sondé (40) à des intervalles prédéterminées ;
une unité d'affichage de vue (553) qui crée une vue en plan (61) et une vue en section transversale (62) à partir de l'information de conception et affiche la vue en plan (61) et la vue en section transversale (62) sur l'unité d'écran de terminal (51) ;
une unité d'enregistrements (556) qui enregistre les informations de position acquises et les informations de géométrage calculées à partir des informations de positions et des informations de conception dans l'unité de stockage de terminal (53) comme des données de point d'observation (81a, 81b, ...) sur la section transversale ;
**caractérisé en ce que** le dispositif d'aide au géométrage comprend en outre :
une unité d'affichage de résultat en section transversale (557) qui affiche une liste de points d'observation (81) dans laquelle les données de point d'observation (81a, 81b, ...) sont arrangées comme des données placées dans l'ordre et une vue en section transversale d'observation (83) affichant des positions de points d'observation sur la vue en section transversale (62) sur l'unité d'écran (51) ;
une unité de réorganisation de l'ordre d'affichage (558) qui crée un ordre d'affichage des données de point d'observation (81a, 81b, ...) dans la liste de données de point d'observation (81) pouvant être réarrangée selon une commande provenant de l'unité de fonctionnement de terminal (52) ; et
une unité d'affichage de ligne de connexion (559) qui affiche les points d'observation sur la vue en section transversale d'observation qui doivent être reliés par une ligne selon l'ordre d'affichage réarrangé.

5. Système d'aide au géométrage (100) comprenant :
un dispositif d'acquisition de position (30) qui acquiert la position actuelle du dispositif sondé (40) ; et
le dispositif d'aide au géométrage (50) selon la revendication 4,
le dispositif d'aide au géométrage (50) étant capable de communiquer avec le dispositif d'acquisition de position afin d'acquérir les informations de position du dispositif sondé (40).

6. Procédé d'aide au géométrage,
un ordinateur (50) :
lisant des informations de conception comportant une ligne médiane (CL) d'une route, des points centraux fixés à des intervalles prédéterminées sur la ligne médiane (CL), des sections transversales perpendiculaires à la chaussée, chaque section transversale comprenant un point central respectif, et des points constitutifs (PXₓ) fixés sur des sections transversales respectives, les points constitutifs étant des points auxquels des piquets servant comme marquages sur un site doivent être installés ;
acquérant des informations de position indiquant une position actuelle d'un dispositif sondé à des intervalles prédéterminées ;
créant une vue en plan (61) et une vue en section transversale (62) de la route à partir des informations de conception et affichant la vue en plan et la vue en section transversale sur une unité d'écran (51) de l'ordinateur (50) ;
enregistrant l'information de position acquise et l'information de géométrage calculée à partir de l'information de position et l'information de conception, dans une unité de stockage (53) de l'ordinateur (50) comme des données de point d'observation (81a, 81b, ...) sur la section transversale ;
**caractérisé en ce que** l'ordinateur en outre :
affiche une liste de points d'observation (81) dans laquelle les données de point d'observation (81a, 81b, ...) sont arrangées comme des données placées dans l'ordre et une vue en section transversale d'observation affichant des positions de points d'observation sur la vue en section transversale sur l'unité d'écran (51) de l'ordinateur (50) ;
crée un ordre d'affichage des données de point d'observation (81a, 81b, ...) dans la liste de données de point d'observation (81) pouvant être réarrangée selon une commande provenant d'une unité de fonctionnement (52) de l'ordinateur' (50) ; et affiche une ligne de connexion (84) reliant les points d'observation sur la vue en section transversale d'observation (83) selon l'ordre d'affichage.
